# EUROPÄISCHE PATENTSCHRIFT

(11) **EP 0 624 310 B1**
(45) Veröffentlichungstag und Bekanntmachung des Hinweises auf die Patenterteilung: **04.11.1998**
(21) Anmeldenummer: 94106641.7
(22) Anmeldetag: 28.04.1994
(51) Int. Cl.: A01F 12/44

(54) **Reinigungsvorrichtung, insbesondere für einen Mähdrescher**
Cleaning shoe, especially for a combine
Dispositif de nettoyage en particulier pour moissonneuse-batteuse

(30) Priorität: 10.05.1993 US 59541
(43) Veröffentlichungstag der Anmeldung: 17.11.1994
(73) Patentinhaber: Deere & Company, Moline, Illinois 61265-8098 (US)
(72) Erfinder: Peters, Loren William, Bettendorf, Iowa 52722 (US)
(74) Vertreter: Feldmann, Bernhard

(56) Entgegenhaltungen:
- DE-A- 1 482 256
- DE-A- 4 028 993
- DE-U- 8 221 573
- FR-A- 965 977
- GB-A- 599 002
- US-A- 2 612 742
- US-A- 2 970 599
- US-A- 3 392 832
- US-A- 3 800 804
- SOVIET INVENTIONS ILLUSTRATED Section PQ, Week 8705, 4. Februar 1987 Derwent Publications Ltd., London, GB; Class P12, AN 87-035847 & SU-A-1 237 114 (GORYACHKIN AGRIC ENG) 15. Juni 1986

## Beschreibung

Die Erfindung betrifft eine Reinigungsvorrichtung, insbesondere für einen Mähdrescher, mit mehreren durchlässigen oder nicht durchlässigen und in Materialflußrichtung aufeinander folgenden Gutförderböden und einem Reinigungsgebläse mit mehreren Auslässen zum Fördern von Luft in die Spalte zwischen mehreren Gutförderböden.

Die DE-A1-40 28 993 offenbart einen Mähdrescher mit einer Reinigungsvorrichtung, die das von einer Drescheinheit und von Schüttlern kommende ausgedroschene Gut zunächst auf einem Vorbereitungsboden sammelt und dann über eine Fallstufe einem Kurzstrohsieb eines Siebkastens aufgibt. Unterhalb des Kurzstrohsiebs erstreckt sich ein Körnersieb. Ein Reinigungsgebläse weist einen Auslaß mit zwei während des Betriebs bewegten Stellorganen auf, die die tangential ausgestoßene Luft einem Teil von insgesamt sechs Luftleitkanälen zuführen. Die Beaufschlagung variiert periodisch, so daß andauernd andere Bereiche des Kurzstrohsiebs und des Körnersiebs bzw. Übergänge zwischen diesen Sieben und zwischen dem Vorbereitungsboden und dem Kurzstrohsieb mit einem Luftstrom beaufschlagt werden.

Die AU-222,254 beschreibt eine Getreidereinigungsvorrichtung mit einem Reinigungsgebläse, das die Luft ebenfalls tangential bzw. radial abgibt. Ein Auslaß dieses Reinigungsgebläses ist derart groß gewählt, daß die abströmende Luft gleichzeitig in drei Schichten geteilt wird, und zwar ober- und unterhalb eines Kurzstrohsiebs und ober- und unterhalb eines Körnersiebs, die jeweils Gutförderböden darstellen. Desgleichen verhält es sich bei einer Reinigungsvorrichtung in einer Dreschmaschine nach der US-A-2,970,599.

Aus der US-A-4,531,528 geht ein Mähdrescher hervor, dessen Reinigungsvorrichtung ein Vorbereitungssieb und darunter einen Körnerboden enthält, denen sich ebenfalls übereinander angeordnet ein Kurzstrohsieb und ein Körnersieb anschließen. Unterhalb des Körnerbodens ist ein Reinigungsgebläse mit zwei Auslässen vorhanden, die an diametral gegenüberliegenden Seiten aus dem Gebläsemantel austreten. Während der nach vorne ausgerichtete Auslaß Luft über den Körnerboden leitet, der die dort anliegenden Spreuanteile austrägt, wird die Luft aus dem nach hinten gerichteten Auslaß unter das Kurzstroh- und das Körnersieb gefördert, um die dortige Spreu zu entfernen.

Nach der US-A-4,307,732 ist eine Reinigungsvorrichtung in einem Mähdrescher mit einem geriffelten Vorbereitungsboden und darauffolgend einem Stufenboden und einem Kurzstrohsieb versehen, über die das zu reinigende Gemenge nacheinander gefördert wird. Ein Reinigungsgebläse ist mit zwei Auslässen ausgestattet, von denen ein oberer Luftstrom durch den Spalt zwischen dem Vorbereitungsboden und dem Stufenboden und ein unterer Luftstrom unter den Stufenboden, das Kurzstrohsieb und das Körnersieb geleitet wird.

Die der Erfindung zugrunde liegende Aufgabe wird darin gesehen, eine Reinigungsvorrichtung vorzuschlagen, die für die Reinigung eines großen Gemengestroms geeignet ist.

Diese Aufgabe wird erfindungsgemäß durch die Lehre des Patentanspruchs 1 gelöst, wobei in den weiteren Patentansprüchen die Lösung in vorteilhafter Weise weiterentwickelnde Merkmale aufgeführt sind und eine besonders wirkungsvolle Anwendung angegeben ist.

Auf diese Weise besteht in vergrößertem Maß die Möglichkeit, das Gutgemenge einem starken Luftstrom zu unterwerfen, der an den geeigneten Stellen auf das Gemenge auftrifft und den Schmutz, insbesondere die Spreu, austrägt.

Die Parallelität der Ausstoßrichtung aus den beiden Kanälen des ersten Auslasses verhindert Turbulenzen in dem Bereich der Reinigungsvorrichtung, in dem beide Luftströme aufeinander stoßen, so daß ein sehr effektiver Austrag unerwünschten Materials möglich ist. Die Vermeidung von Turbulenzen ist insbesondere deshalb erwünscht, weil Wirbelzonen Gut einfangen würden, anstatt es zum Austrag freizugeben, was sich auf die gesamte Abscheidekapazität niederschlagen würde.

Wenn das Reinigungsgebläse die Luft axial ansaugt und tangential ausstößt, bleibt auf dem Gebläsemantel ausreichend Raum, um großvolumige Auslässe mit einem hohen Fördervolumen anzubringen.

Von besonderem Vorteil ist die Ausstattung eines Mähdreschers mit der erfindungsgemäßen Reinigungsvorrichtung, da dessen Baumaße und mithin auch die seiner Reinigungsvorrichtung nicht beliebig vergrößert werden können und es deshalb auf eine effiziente Reinigung auf kleinem Raum ankommt.

Unter der großen Zahl von möglichen und bekannten Anordnungen und Ausbildungen von Gutförderböden weist diejenige eine hohe Reinigungskapazität in einem Mähdrescher auf, bei der die erste von einem Staffel- oder Schneckenboden, die zweite von einem Stufenboden, die dritte von einem Aufbereitungsboden und die vierte von einem Kurzstrohsieb gebildet wird.

Die Abscheidewirkung am Anfang des vierten Gutförderbodens, nämlich des Kurzstrohsiebs, wird erhöht, wenn bereits im Bereich dessen erster Lamelle ein gegenüber den übrigen Lamellen überhöhter Luftstrom passieren kann, der bereits zu Beginn dieses Abscheidungsabschnitts einen Großteil an Spreu erfassen und in einem Bogen über die Gutförderböden austragen kann.

In der Zeichnung ist ein nachfolgend näher beschriebenes Ausführungsbeispiel der Erfindung dargestellt. Es zeigt:
- Fig. 1: einen Mähdrescher in schematischer Darstellung und in Seitenansicht mit einer erfindungsgemäßen Reinigungsvorrichtung und
- Fig. 2: die Reinigungsvorrichtung aus Figur 1 in vergrößerter Darstellung und Seitenansicht.

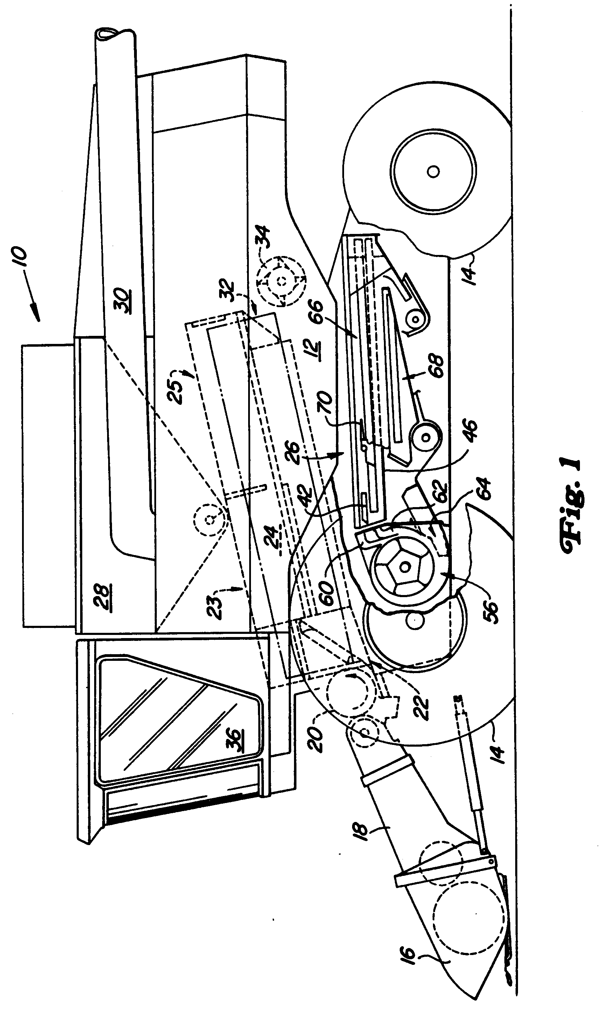

Figur 1 zeigt einen Mähdrescher 10 mit einem Chassis 12, von dem Räder 14 bis zum Boden ragen. Eine Erntebergungsvorrichtung 16 ist an dessen Vorderseite angebaut und wird dazu benutzt, Erntegut aufzunehmen und es einem Schrägförderer 18 zuzuführen. Das geerntete Gut wird von dem Schrägförderer 18 an eine Übergabetrommel 20 weitergegeben, die es nach oben durch einen Eingangsübergabebereich 22 zu einer Axialabscheidevorrichtung 24 leitet.

Die Axialabscheidevorrichtung 24 enthält einen Dreschabschnitt 23 bzw. ein Dreschsystem und einen Abscheideabschnitt 25 bzw. ein Abscheidesystem. Getreide, also Körner, und Spreu fallen durch Gitter am Boden der Axialabscheidevorrichtung 24 einer Reinigungsvorrichtung 26 zu. Die Reinigungsvorrichtung 26 entfernt die Spreu und führt das gereinigte Getreide zu einem nicht gezeigten Körnerelevator. Der Körnerelevator gibt das saubere Getreide in einen Korntank 28, von wo aus es mit einem Entleerrohr 30 auf einen Anhänger oder Lastwagen abgegeben werden kann.

Ausgedroschenes und abgeschiedenes Stroh wird durch einen Auslaß 32 aus der Axialabscheidevorrichtung 24 zu einer Abgabetrommel 34 gegeben. Die Abgabetrommel 34 wiederum wirft das Stroh am rückwärtigen Ende des Mähdreschers 10 aus. Die Bedienung des Mähdreschers 10 erfolgt von einer Fahrerkabine 36 aus.

Obwohl die vorliegende Erfindung zusammen mit einem sogenannten Axialflußmähdrescher offenbart ist, könnte sie auch bei einem Mähdrescher herkömmlicher Bauart mit einer quer verlaufenden Tangential-Dreschtrommel und sich daran anschließenden Strohschüttlern oder irgendeinem anderen Mähdrescher mit einer als Siebkasten ausgebildeten Reinigungsvorrichtung Anwendung finden.

Getreide und Spreu, die aus der Axialabscheidevorrichtung 24 entfallen, gelangen zu einem ersten Gutförderboden 40 mit sich längs des Mähdreschers 10 erstreckenden Schnecken. Anstatt mit Schnecken könnte der erste Gutförderboden 40 auch mit einem geriffelten Boden versehen sein. Dieser erste Gutförderboden 40 transportiert mit seinen Schnecken das Getreide und die Spreu zu einem als Stufenboden ausgebildeten zweiten Gutförderboden 42, der an einem Siebkastenrahmen 44 angebracht ist. Der Siebkastenrahmen 44 wird mittels eines herkömmlichen nicht gezeigten Antriebs oszillierend, d. h. vor und zurück bewegt. Unmittelbar unterhalb des zweiten Gutförderbodens 42 befindet sich als ein dritter Gutförderboden 46 ein gegenüber dem zweiten Gutförderboden 42 größerer Aufbereitungsboden. Wie der zweite Gutförderboden 42 ist auch der dritte Gutförderboden 46 mit dem Siebkastenrahmen 44 verbunden. Material, das aus dem Abscheidebereich 25 austritt, fällt direkt auf den dritten Gutförderboden 46. Sowohl der zweite Gutförderboden 42 als auch der dritte Gutförderboden 46 ist mit einem geriffelten Boden 48 bzw. 50 ausgerüstet, die das Material nach hinten bewegen, wenn der zweite und der dritte Gutförderboden 42 und 46 von dem Siebkastenrahmen 44 oszillierend von vorne nach hinten bewegt werden.

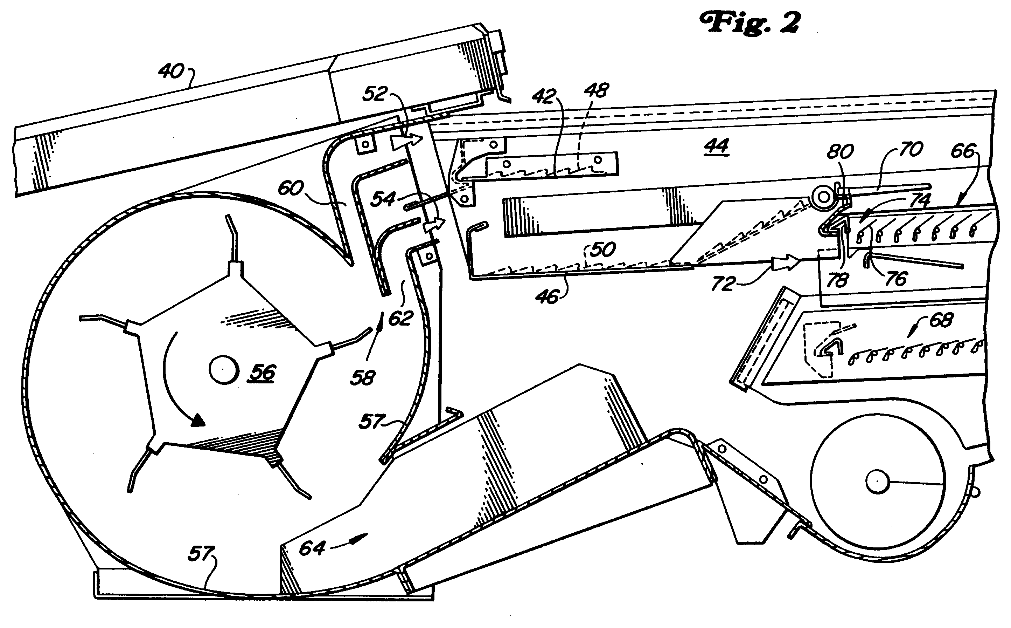

Während das Getreide und die Spreu, also der dieses Gemenge enthaltende Gutstrom, von den Schnecken des ersten Gutförderbodens 40 zu dem zweiten Gutförderboden 42 fällt, passieren sie einen ersten Luftstrom 52. Auf der Fallstrecke von dem zweiten Gutförderboden 42 und dem Abscheidebereich 25 zu dem dritten Gutförderboden 46 fällt das Gutgemenge durch einen zweiten Luftstrom 54. Wie es aus Figur 2 hervorgeht, sind der erste und der zweite Luftstrom 52 und 54 im wesentlichen horizontal mit einer geringen Neigung nach oben ausgerichtet. Diese Luftströme 52, 54 dienen einer Vorreinigung des Getreides und der Spreu, indem ein Teil der Spreu aus dem Gemenge herausgeblasen wird.

Ein Reinigungsgebläse 56 enthält ein Gehäuse 57 mit zwei tangentialen Auslässen 58 und 64. Der erste Auslaß 58 besitzt zwei Kanäle 60 und 62. Der erste Kanal 60 wird dazu benutzt, den ersten Luftstrom 52 zwischen den ersten Gutförderboden 40 und den zweiten Gutförderboden 42 zu leiten. Der zweite Kanal 62 dient der Zufuhr des zweiten Luftstroms 54 zwischen den zweiten Gutförderboden 42 und den dritten Gutförderboden 46.

Der zweite Auslaß 64 leitet Luft zu einem als Kurzstrohsieb ausgebildeten vierten Gutförderboden 66 und zu einem Körnersieb 68 und ist mit einer Anzahl sich axial erstreckender Führungen versehen, um den Luftstrom dem vierten Gutförderboden 66 und dem Körnersieb 68 zuzuführen. Die Luft für das Reinigungsgebläse 56 wird axial in dieses eingesaugt und tangential durch die beiden Auslässe 58, 64 ausgestoßen.

Der vierte Gutförderboden 66 und das Körnersieb 68 sind ebenfalls an den Siebkastenrahmen 44 angeschlossen und werden mit diesem hin- und herbewegt. Die Luft strömt nach oben durch das Körnersieb 68 und den vierten Gutförderboden 66 hindurch und nimmt dabei die leichtere Spreu mit, um sie an der Rückseite des Mähdreschers 10 aus diesem auszuwerfen.

Ein Fingerrechen 70 ist an das rückwärtige Ende des dritten Gutförderbodens 46 montiert, so daß das Material, das den dritten Gutförderboden 46 verläßt, durch die Spalte in dem Fingerrechen 70 hindurchfällt. Der Fingerrechen 70 enthält mehrere sich nach hinten erstreckende Finger, die an einer quer verlaufenden und selbst an dem dritten Gutförderboden 46 angreifenden Schiene befestigt sind. Der Fingerrechen 70 schichtet das Erntegutmaterial, wenn es zwischen den Fingern hindurch fällt. Während das Erntegut zwischen den Fingern hindurchtritt, unterfällt es einem dritten Luftstrom 72 zum Ausblasen der Spreu aus dem Bereich des vierten Gutförderbodens 66 und des Körnersiebs 68 zu, der von einer vordersten Queröffnung 74 in dem vierten Gutförderboden 66 kommt. Die vorderste Queröffnung 74 wird von der ersten quer verlaufenden Lamelle 76 und einem vorderen quer verlaufenden Rahmenteil 78 des vierten Gutförderbodens 66 gebildet. Der dritte auch als Spreu-Luftstrom bezeichenbare Luftstrom 72 durch diese Queröffnung 74 ist ungefähr doppelt so groß wie der Luftstrom durch die verbleibenden Queröffnungen in dem vierten Gutförderboden 66, die durch benachbarte quer verlaufende Lamellen gebildet werden. Ein Spalt 80, der sich zwischen dem dritten und dem vierten Gutförderboden 46 und 66 befindet, ist abgedichtet, um zu verhindern, daß der dritte Luftstrom 72 durch diesen Bereich tritt.

## Patentansprüche

1. Reinigungsvorrichtung (26), insbesondere für einen Mähdrescher (10), mit mehreren durchlässigen oder nicht durchlässigen und in Materialflußrichtung aufeinander folgenden Gutförderböden (40, 42, 46, 66) und einem Reinigungsgebläse (56) mit mehreren Auslässen (58, 64) zum Fördern von Luft in die Spalte zwischen mehreren Gutförderböden (40, 42, 46, 66), dadurch gekennzeichnet, daß der erste Auslaß (58) einen Kanal (60), der einen ersten Luftstrom (52) zwischen einen ersten und einen zweiten Gutförderboden (40, 42) führt und einen anderen Kanal (62) aufweist, der einen zweiten Luftstrom (54) zwischen den zweiten und einen dritten Gutförderboden (42) und (46) leitet, während der zweite Auslaß (64) einen dritten Luftstrom (72) unter einen vierten Gutförderboden (66) leitet.

2. Reinigungsvorrichtung nach Anspruch 1, dadurch gekennzeichnet, daß die Ausstoßrichtungen beider Kanäle (60, 62) parallel zueinander verlaufen.

3. Reinigungsvorrichtung nach einem oder mehreren der vorherigen Ansprüche, dadurch gekennzeichnet, daß das Reinigungsgebläse (56) die Luft axial ansaugt und tangential ausstößt.

4. Mähdrescher (10) mit einer Reinigungsvorrichtung (26) nach einem oder mehreren der vorherigen Ansprüche.

5. Mähdrescher nach Anspruch 4, gekennzeichnet durch vier Gutförderboden (40, 42, 46, 66), von denen ein erster (40) von einem geriffelten oder mit Schnecken versehenen Vorbereitungsboden, ein zweiter (42) von einem Stufenboden, ein dritter (46) von einem Aufbereitungsboden und ein vierter (66) von einem Kurzstrohsieb gebildet wird.

6. Mähdrescher nach Anspruch 5, dadurch gekennzeichnet, daß der vierte Gutförderboden (66) sich quer zur Förderrichtung erstreckende Lamellen (76) aufweist, wobei der Abstand zwischen einer vorderen Lamelle (76) und einem diese aufnehmenden Rahmenteil (78) oder einer weiteren Lamelle im wesentlichen doppelt so groß ist wie der Abstand zwischen folgenden Lamellen.

## Claims

1. A cleaning device (26), especially for a combine harvester (10), with a plurality of permeable or impermeable crop feeding pans (40, 42, 46, 66) following one another in the direction of material flow, and a cleaning fan (56) with a plurality of outlets (58, 64) for feeding air into the gaps between a plurality of crop feeding pans (40, 42, 46, 66), characterized in that the first outlet (58) comprises one channel (60) which feeds a first airstream (52) between first and second crop feeding pans (40, 42) and another channel (62) which passes a second airstream (54) between the second and a third crop feeding pan (42 and 46), while the second outlet (64) passes a third airstream (72) under a fourth crop feeding pan (66).

2. A cleaning device according to claim 1, characterized in that the discharge directions of the two channels (60, 62) are parallel to one another.

3. A cleaning device according to one or more of the preceding claims, characterized in that the cleaning fan (56) sucks in the air rally and discharges it tangentially.

4. A combine harvester (10) with a cleaning device (26) according to one or more of the preceding claims.

5. A combine harvester according to claim 4, characterized by four crop feeding pans (40, 42, 46, 66), of which a first (40) is formed by a pre-conditioning pan which is serrated or provided with augers, a second (42) is formed by a step pan, a third (46) by a conditioning pan and a fourth (66) by a chaff sieve.

6. A combine harvester according to claim 5, characterized in that the fourth crop feeding pan (66) comprises louvres (76) extending transverse to the feed direction, wherein the spacing between a front louvre (76) and a frame part (78) receiving the same, or a further louvre, is substantially twice as large as the spacing between following louvres.

## Revendications

1. Dispositif de nettoyage (26), notamment pour une moissonneuse-batteuse (10), comportant plusieurs fonds (40, 42, 46, 66) de convoyage de la matière, qui peuvent être traversés ou non par la matière et se succèdent dans la direction du flux de matière, et un ventilateur de nettoyage (56) comportant plusieurs sorties (58, 64) servant à entraîner de l'air dans les fentes présentes entre plusieurs fonds (40, 42, 46, 66) de convoyage de la matière, caractérisé en ce que la première sortie (58) comporte un canal (60), qui guide un premier courant d'air (52) entre des premier et second fonds (40, 42) de convoyage de la matière et un autre canal (62) qui dirige un second courant d'air (54) entre les second et troisième fonds (42) et (46) de convoyage de la matière, tandis que la seconde sortie (64) dirige un troisième courant d'air (72) au-dessous d'un quatrième fond (66) de convoyage de la matière.

2. Dispositif de nettoyage selon la revendication 1, caractérisé en ce que les directions d'éjection des deux canaux (60, 62) sont parallèles.

3. Dispositif de nettoyage selon une ou plusieurs des revendications précédentes, caractérisé en ce que le ventilateur de nettoyage (56) aspire de l'air axialement et l'éjecte tangentiellement.

4. Moissonneuse-batteuse (10) comportant un dispositif de nettoyage (26) selon un ou plusieurs des revendications précédentes.

5. Moissonneuse-batteuse selon la revendication 4, caractérisée par quatre fonds (40, 42, 46, 66) de convoyage de la matière, parmi lesquels un premier fond (40) est un fond de préparation nervure ou pourvu de vis, un deuxième fond (42) est un fond étage, un troisième fond (46) est un fond de traitement et un quatrième fond (66) est formé par un tamis pour les courtes pailles.

6. Moissonneuse-batteuse selon la revendication 5, caractérisée en ce que le quatrième fond (66) de convoyage de la matière possède des lamelles (76) qui s'étendent transversalement par rapport à la direction de convoyage, la distance entre une lamelle avant (76) et un élément de cadre (78), qui reçoit cette lamelle, ou une autre lamelle est essentiellement deux fois supérieure à la distance présente entre des lamelles successives.
